# EUROPEAN PATENT SPECIFICATION

(11) **EP 3 998 326 B1**
(45) Date of publication and mention of the grant of the patent: **16.08.2023**
(21) Application number: 21201720.6
(22) Date of filing: 08.10.2021
(51) Int. Cl.: C10G 1/10

(54) **PYROLYTIC MOLECULAR DISSOCIATOR AND METHOD**
PYROLYTISCHER MOLEKULARDISSOZIATOR UND VERFAHREN
DISSOCIATEUR MOLÉCULAIRE PYROLYTIQUE ET PROCÉDÉ

(30) Priority: 30.10.2020 IT 202000025951
(43) Date of publication of application: 18.05.2022
(73) Proprietor: Get Energy Prime Italia S.r.l., 00192 Rome (IT)
(72) Inventor: Marcorelli, Gianluca, 00192 Roma (IT); Sella, Giovanni, 00192 Roma (IT)
(74) Representative: Sarpi, Maurizio

(56) References cited:
- EP-A1- 1 726 634
- CA-A1- 3 112 449
- US-A1- 2009 119 994

## Description

The present invention relates to a method and system for continuously treating non-hazardous special waste, and in particular a pyrolytic thermal molecular dissociator for non-hazardous special waste, with low energy consumption, aimed at transforming waste of various matrices into usable hydrocarbon mixtures, such as fuels, in compliance with the provided environmental aspects, by virtue of a loading and discharging system designed for never needing to halt operation of the pyrolysis reactor.

A particular feature of the invention is that said pyrolysis reactor is provided with a sectorial induction heating system, the power of which, being modulable by sectors as required, allows reaching operating temperatures between 200° and 750°C.

Non-hazardous special waste is understood to mean types of waste generated by production activities, which do not contain a high dose of pollutants therein, which cannot be disposed of in common landfills, but which must be managed separately by authorized operators, such as transport companies or disposal firms.

In particular, the described molecular dissociator is particularly suitable for treating fiberglass and plastic materials, for recovering interesting amounts of methane and hydrogen.

It should be pointed out that the process and system, by converting a non-hazardous waste into fuel oil/gas, after clearly defining the classification of the products, in compliance with current legislation, results in the termination of the waste status, including the use of the same products as fuels in a stationary endothermic engine for producing electricity and thermal energy.

### BACKGROUND ART

Pyrolysis is a process of thermochemical decomposition in the absence of oxygen and without a flame, which, due to heat, determines the thermal cracking of the molecules, or breaking of the chemical bonds and transformation of the matter into simpler components.

In the absence of oxygen, the large molecules then break up into smaller molecules, until reaching the most elementary molecules, such as those of the primary elements (C, H, O, N) or light gases (CH4, CO, CO2, H20) .

Many systems, in the different forms thereof, are known for treating solid waste based on such a process:
conventional pyrolysis, at moderate temperatures of less than 600 °C, with moderate reaction times; from which the three fractions are obtained approximately in equal proportions;.
carbonization, the oldest known process of pyrolysis, which is carried out at temperatures between 300 and 500 °C. Only the solid fraction (charcoal) is recovered from such a process, whereby action is taken to minimize the other fractions;
fast pyrolysis, at relatively low temperatures (from 500 to 650 °C), at which the gasification reactions occur quickly and with short contact times so as to reduce the reforming of intermediate compounds, favoring the production of the liquid fraction up to 70-80% by weight of the incoming biomass; and
flash pyrolysis, carried out to keep the same contact times as the "fast pyrolysis", but at temperatures of higher than 700 °C and with contact times of less than 1 second, so as to favor the production of a liquid fraction about 80% by weight of the incoming biomass, but with a more restricted change in composition.

Basically, with the pyrolysis process, a fuel with low energy density (3.000-4.000 kcal/kg) is transformed into another with a higher specific energy content (8.000-10.000 kcal/kg), thus reducing the transport costs thereof.

Purely for informative purposes, among the many patent documents available, we can mention the following:
CN 1910401 B describes a pyrolytic treatment system for waste having multiple pyrolysis chambers. The system is to be adapted to heat at least one pyrolysis chamber independently of at least one other pyrolysis chamber.

WO2005//022038 relates to a treatment system having a supported pyrolysis chamber so as to cause minimum movements or flexions of the chamber when the temperature in the chamber changes. Preferred solutions use support structures made of materials having low thermal expansion coefficients and structures adapted to allow the chambers to expand and contract with the changes in temperature.

A biogas treatment system is provided in US 8,153,850, comprising a biomass conversion subsystem, a pyrolysis subsystem, and a fuel conversion subsystem. The biomass conversion system uses a biological process to create alcohol, methane, or mixtures thereof from a biomass, while it produces a certain amount of residual biomass. The pyrolysis subsystem generates hydrocarbon gases (pyrolysis gases) and/or pyrolysis oil from the residual biomass.

Methods and apparatuses are described in US 9,410,094 for transforming waste, such as, for example, solid municipal waste and biomasses, in a pyrolysis chamber, creating a synthetic gas, which can be used to generate electric current by an electric generator, a turbine or another power generator device.

The system according to the present invention distinctly differs from the subject of such property rights and from what is known for several functional and structural features which allow the system to work continuously, with a significant saving in energy, at the same operating temperature, without the emissions produced by naked flame combustion, controlling the ingress of air into the reactor, to keep the concentration of oxygen below a threshold, preventing oxidation/combustion reactions, produced in the process, and with the possibility to proportionally adjust, within predetermined limits, the final ratio of oil/gas produced.

The recent patent document CA 3 112449 A1 dated 19/03/2020, which can be considered as the prior art closest to the subject of the present patent application, describes a pyrolytic molecular dissociator system for producing a hydrocarbon fuel gas and oil, comprising a cylindrical tubular reactor provided, externally, with an induction sectorial heating system, through which a magnetic field is created (heating by induction), while internally, it is provided with an auger, which advances the finely crushed waste.
- Another varying pitch auger is arranged inside the feeding tube, which conveys the waste loaded into the hopper to the reactor inlet for triggering the compression, while the waste to be treated is continuously introduced through a feeding system comprising a loading hopper and a feeding tube. However, such a solution does not fully meet the market expectations, as it does not solve two fundamental problems: the first related to the power of the induction heating, which is not axially modulable as required, and the second related to the safety of the reactor, as no system is provided, which minimizes the risk of oxidation/combustion reactions in the reactor due to a concentration of free oxygen greater than 4% by volume.

Such a problems have been solved with the present invention with a dissociator system having the distinctive features of claim 1 and a method for continuously treating special waste according to claim 16.
In fact, to this end, according to a first feature of the finding, the heart of the system, the subject of the invention, consists of a cylindrical tubular reactor, into which the finely crushed waste is introduced, where the system for feeding the waste to the reactor includes a system with two guillotine valves, arranged between the auger system and the inlet of the reactor, which operate in opposite mode (open-closed/closed-open), between which there is a vacuum chamber operating to eliminate the ingress of "parasitic" air and therefore minimize the risk of oxidation/combustion reactions. In combination with such a feeding system, the reactor is also provided with a safety system, which insufflates nitrogen therein should the concentration of oxygen exceed 4% by volume.

Advantageously, the reactor is not heated with a naked flame, with the consequent emissions produced by the combustion, but externally, it is provided with a sectorial induction heating system, which includes a coil consisting of a copper tube, crossed by a refrigerant, through which a magnetic field is created, the power of which, according to a particular feature of the invention, is modulable by sectors as required, due to the presence of thermocouples distributed along the length of the reactor. Such a solution, which enables reaching operating temperatures from 200° to 750°C, nonetheless allows not using the obsolete naked flame system with the consequent emissions produced by the combustion, giving a saving of 42% of electricity required for the process, at the same temperature, with respect to a traditional electrical resistance.

An auger is present inside said reactor, which, besides advancing the waste to be treated, being inside the magnetic field generated by the coil, enveloping the reactor, exercises the function of a thermal vector capable of returning thermal energy to the waste with which it is in contact. This results in the formation of a homogenously warmer environment with a significant saving in energy/time.

Another feature of the present invention lies in the fact that the current of gas produced in the reactor is sucked in by a pump downstream of the system. Such a gas suction pump has two functions: besides facilitating the extraction of the gas from inside the reactor (already facilitated by the inclined position thereof), it allows adjusting the residence time of the gas through two condensers with a programable and varying temperature, giving the possibility to obtain, by condensing the heaviest fraction, a greater or smaller amount of liquid product, which mainly consists of hydrocarbons having boiling temperatures (and therefore molecular weights) approximately between the cut of the gas and that of the heavy fuel.

From the above, it is apparent, that this technology, which is more advanced in ecological terms, does not produce the effects of common incinerators as it allows a thermo-transformation and non-destruction, allowing the production of electricity and the production of a by-product from the production waste.

Further features and advantages of the find will be apparent from the following description with reference to the accompanying drawings, illustrating, purely by way of non-limiting example a preferred embodiment thereof.

In the drawings:
Fig. 1 is a technical diagram of the pyrolytic dissociation system according to the present finding;
fig. 2 is a raised side view of the same system showing the loading hopper, the pyrolytic reactor and two cooling/condensation towers;
fig.2A is a rendering, diagrammatically showing a perspective view of the development of the system from the loading hopper to the solid discharging system at the end of the pyrolysis reactor with the removal of the solid waste through a conduit, reaching the ash storage chamber from a lower level, and the sending of the hydrocarbon-based vapor through an upper conduit, which reaches the cooling/condensation towers;

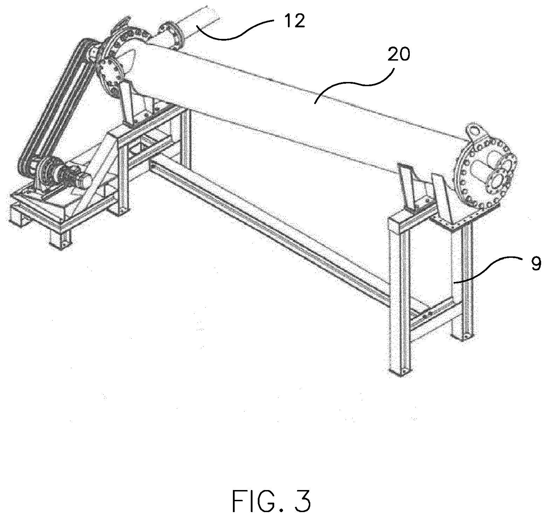

fig. 3 shows a perspective view of the only pyrolytic reactor according to the invention, mounted onto a metal structure so as to be on a slight slope (inclination of 10°-20°) with respect to the feeding inlet, to favor the outgoing flow of the vapors, which are created due to the molecular dissociation process;
fig.4 is a view of the system for feeding the waste to the reactor showing a sectional view of the internal auger in the tube, which connects the loading hopper to the inlet of the reactor, and which causes the waste material loaded into the hopper to advance;
fig. 5 is a raised side view of the reactor in fig. 3, with the loading hopper thereof;
fig.6 is a sectional view according to the trace plane K-K in fig.5, showing the auger inside the pyrolytic reactor;

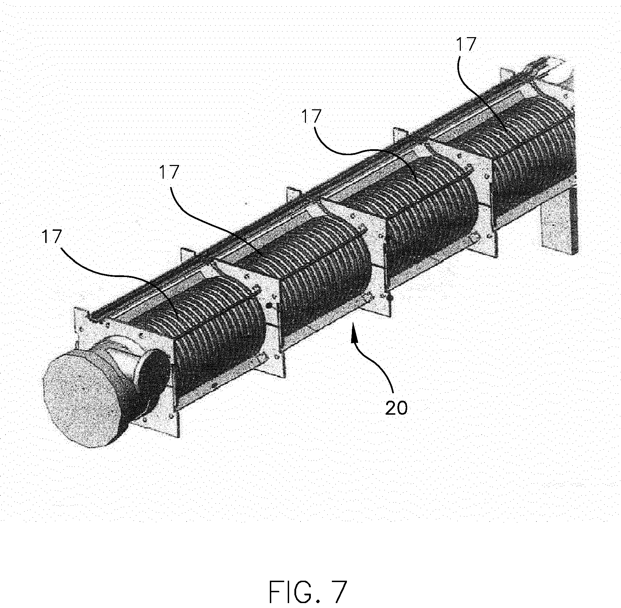

fig. 7 is a perspective view of the reactor, made of steely iron, still devoid of external insulation for the safety of any accidental contacts by the operators, onto which a copper coil is mounted, through which a magnetic field is created, capable of taking the treated material to the desired temperature;
fig. 8 is a detail of the pyrolytic reactor in fig. 7, which evidences the presence of an appropriate thermal insulating layer interposed between the reactor wall and the coil consisting of a copper tube crossed by refrigerant and one of the thermocouples distributed along the pyrolytic reactor, which, crossing the insulation layer, allow controlling the operating temperature of the reactor;
fig. 8a shows the external insulation of the pyrolytic reactor aimed at ensuring a temperature, which is not seriously harmful, in the event of accidental contact by the operators;
fig. 9 shows the system of two guillotine valves arranged between the auger system and the reactor inlet, adapted to operate in opposite mode (open-closed/closed-open), delimiting a vacuum chamber provided with an air aspirator and a control probe for verifying that the material is full in the chamber;
fig. 10 shows a perspective view of one of the guillotine valves in fig.9;
fig. 11 is a perspective view of the system showing the system for discharging the solid waste, comprising a second vacuum chamber between two guillotine valves, which manage the exit of the waste at the terminal end of the pyrolytic reactor, with the discharging auger, carrying such a waste to the ash collection cabin, which is visible in the foreground;
fig. 11a is a detail of the guillotine system with the vacuum chamber between the two guillotine valves and the connection thereof to the discharging auger;
fig. 12 shows the cabin, which collects, into big bags, the ash beneath the solid discharging system, and the extracting and filtering hood mounted onto the sky of the cabin, preventing the dispersion of vapors and fine powders into the environment;
fig. 13 is a rear view of the cabin showing the interior thereof with the ash collection bag;

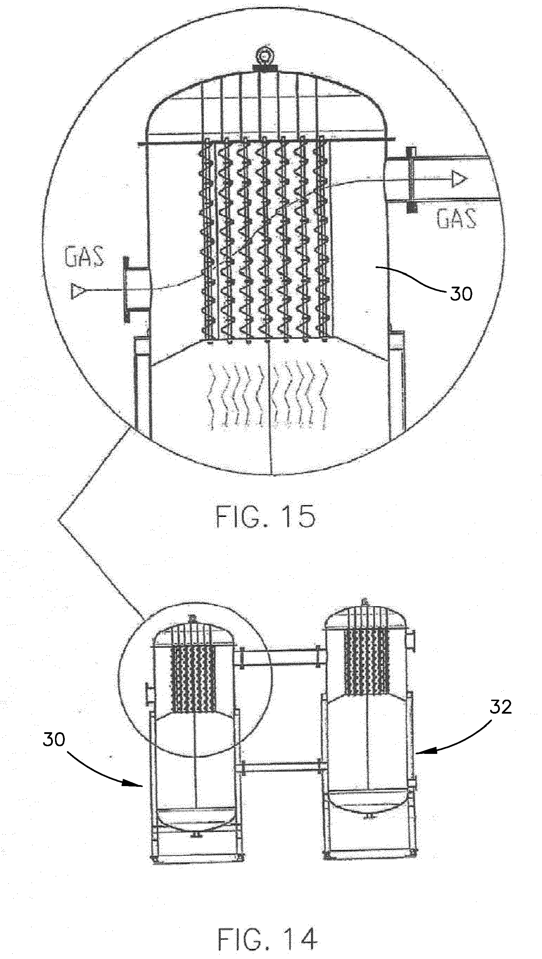

fig. 14 is a sectional view of the pair of condensers at a varying and programmable temperature, forming an energy heat sink, which is reached by the vapors from the reactor due to the 0 depression created as a result of the difference in temperature between the reactor and the condensers, and to the suction of a pump downstream of the system;
fig. 15 is an enlarged detail of the first condenser from the bottom of which the liquid part comes out, directed towards the filtering units and, from the sky, the gaseous part, which passes to the second condenser.;

### DETAILED DESCRIPTION OF THE INVENTION

It is the task of the described system to produce, starting from non-hazardous special waste, a hydrocarbon-based fuel gas and oil, mainly with a view to the use thereof for producing electricity and thermal energy in stationary endothermic engines. Besides the fuel by-products, a solid carbon-based residue is generally formed (referred to as pyrolysis coke) .

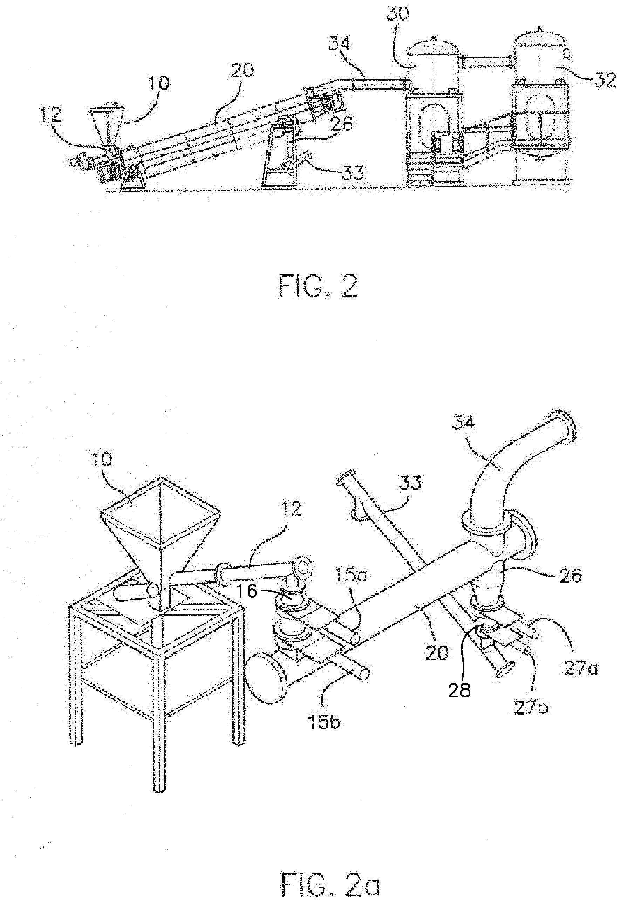

With reference to the diagram in fig. 2, a general description is given of the method according to the invention.

The system operates continuously as the loading and discharging system is designed to never need to halt the operation of the reactor. This system has allowed increasing productivity by 40% with the same hours of operation with respect to batch systems.

The heart of the system is a cylindrical tubular reactor into which the finely crushed waste is introduced. The system for feeding the waste to the reactor is provided with a system with two guillotine valves, between which there is a vacuum chamber, which valves operate so as to eliminate the ingress of "parasitic" air and therefore minimize the risk of oxidation/combustion reactions. However, the reactor is provided with a safety system, which insufflates nitrogen should the concentration of oxygen exceed 4% by volume.

Externally the reactor is provided with a sectorial induction heating system, the power of which - being modulable by sectors as required - allows reaching operating temperatures from 200° to 750°C.

Inside the reactor an auger is present, which advances the waste to be treated.

The heating of the treated material causes a chemical reaction, which mainly breaks up the long hydrocarbon chains, forming the polymers present in the treated waste. Therefore, most of the waste is converted into a mixture of hydrocarbons with medium/low molecular weight, which is in the gaseous state at the determined temperatures and times as they occur in the cracking reactions. A fraction of a lesser amount, however, remains in the solid state, to form the process waste. The current of gas produced in the reactor is sucked in by a pump downstream of the system. The aforesaid gas, passing through two condensers at a varying and programmable temperature, is cooled to determine the condensation of the heaviest fraction thereof, which will form a liquid mainly consisting of hydrocarbons having boiling temperatures (and therefore molecular weights) approximately between the cut of the gas and that of the heavy fuel. Vice versa, the fraction with less molecular weight also remains in the gaseous phase downstream of the cooling and therefore forms a further product, which is different from the aforesaid liquid, consisting in part of light products from the cracking reactions, such as molecular hydrogen (H₂), light hydrocarbons (methane, CH₄, ethane, C₂H₆, propane, C₃H₈ etc.). The gas suction pump has two functions: besides facilitating the extraction of the gas from inside the reactor (already facilitated by the inclined position thereof), it allows adjusting the residence time of the gas in the condensers, giving the possibility to obtain, as much as possible, a greater or smaller amount of liquid product.

To overcome the problems of corrosion, and increase the useful life thereof, the whole system is built in steel AISI 316 and AISI 316L, except for the reactor and the inner auger, which are made of steely iron and only treated with corrosion-resistant systems, letting the magnetic field develop for the heating by the external induction system. Furthermore, all the electrical components are provided with ATEX certification.

With reference to the technical diagram in fig. 2, the system, which implements the method, consists of the following main elements:
A) waste feeding system
B) pyrolysis reactor,
C) solid discharging system;
D) cooling/condensation tower for the vapors produced;
E) filtering units;
F) gas and liquid storage unit,
G) generator for the combustion of the gas/oil (off scheme)
and it is further provided with known command, control, and safety devices, such as:
a control panel with computerized management and control system,
panels for detecting the main operating variables;
electric panels; and
a fire-alarm system with CO2/N cylinders,
which are not the subject of the finding.

Now, we shall analyze the single elements in detail:

### A) Feeding system

As evidenced previously, the system operates continuously and the loading and discharging system is designed to never need to stop the operation of the reactor.

This system has allowed increasing productivity by 40% with the same hours of operation with respect to batch systems.

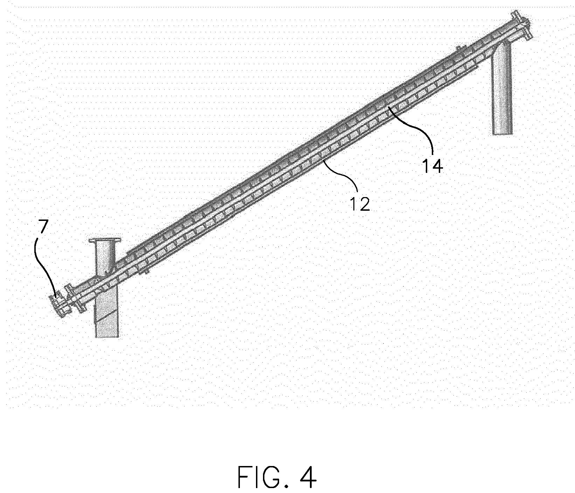

According to the invention, the feeding system consists of a loading hopper 10 and a feeding conduit 12 inside which there is present a varying pitch auger 14, (fig.4), which, operated by a motor 7, carries the waste loaded into the hopper 10 to the inlet of the cylindrical tubular reactor 20.

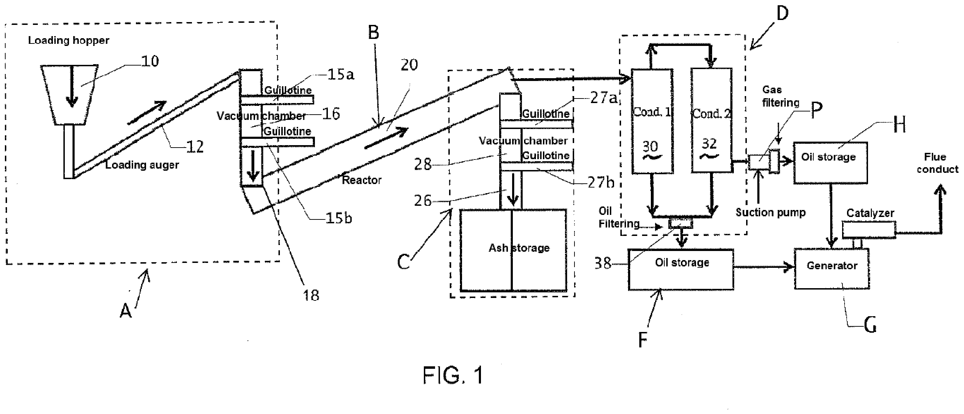

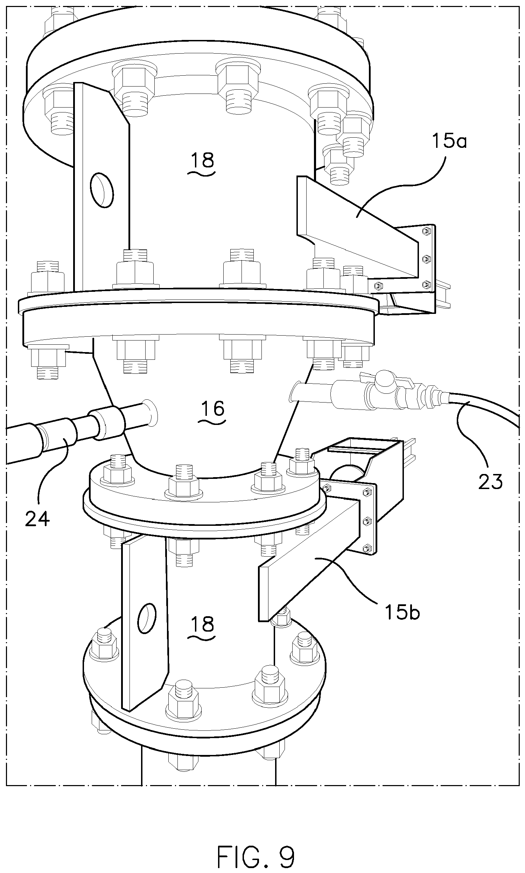

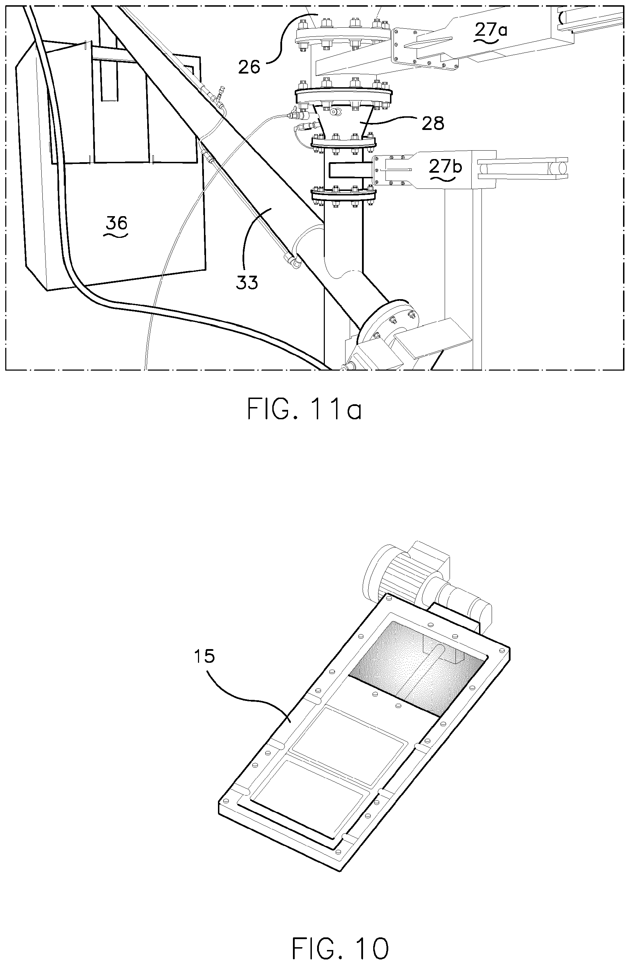

The protection of the reactor from the ingress of parasitic air is ensured by a system of two guillotine valves 15a,15b, (figs.1, 9), arranged in a tubular connection 18 between the conduit 12 of the auger system 14 and the reactor 20, in particular, they are arranged so as to operate in opposite mode (open-closed/closed-open), as shown in fig.10.

There is a vacuum chamber 16 (fig. 9) between the two guillotines 15a and 15b where, after letting the waste in from the first guillotine, before opening the second one, a suction of any air physiologically drawn in by the material is applied for a few seconds by means of an aspirator 23 (fig.9). A control probe 24 is provided in the same vacuum chamber for checking that the material is full.

### B) Pyrolysis reactor

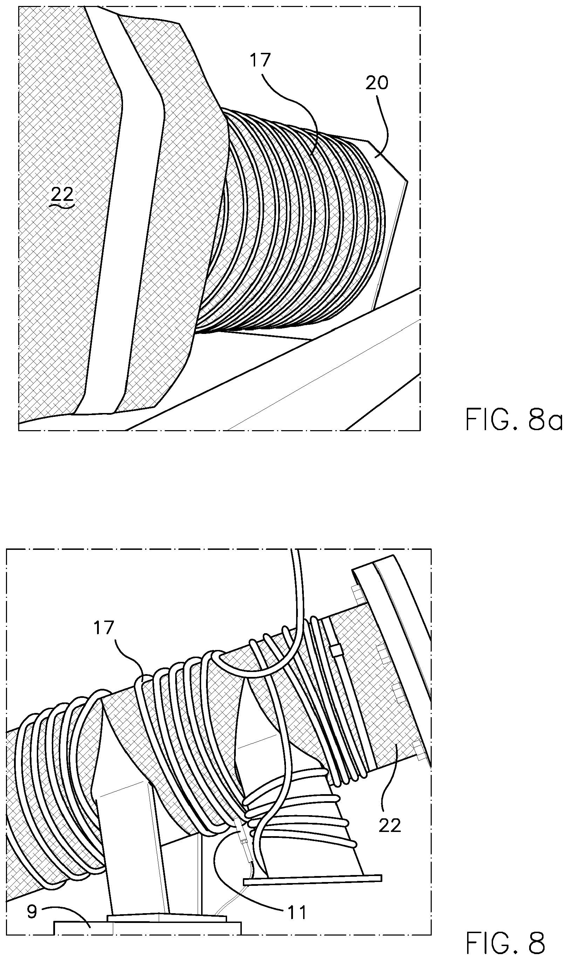

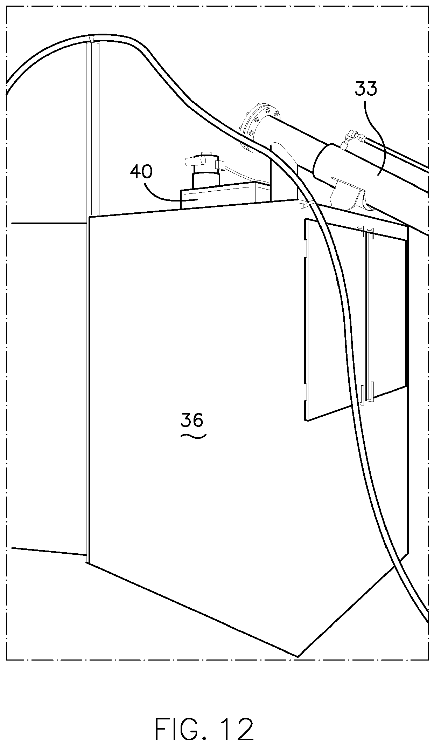

According to a feature of the invention, the reactor 20 (fig.12) is externally provided with a sectorial induction heating system, including an enveloping coil 17 consisting of a copper tube, through which a magnetic field is created, the power of which is modulable by sectors as required, due to the presence of thermocouples 11 distributed along the length of the reactor (see fig.8).

The reactor 20 is built from steely iron to favor the induction effect and it is treated internally with galvanization systems to resist the acid substances, which might be created during the process. It has a cylindrical shape, with a very high proportion between the length and diameter (long and thin), determined according to the amount of waste to be processed/h.

According to the operating temperatures that it must reach, the reactor is appropriately insulated on the outside thereof, as shown in fig.8a, ensuring a temperature, which is not seriously harmful in the event of accidental contact by the operators.

It is also arranged on a slight slope (inclination of 10°-20°) to favor the outgoing flow of the vapors created due to the process, and it is mounted onto a metal structure, generically denoted with reference numeral 9 and it is provided with a grounding system, as required.

The coil 17 placed outside the reactor, but inside the insulation 22 (see fig.8a) consists of a copper tube with a step of about cm.5 crossed by a refrigerant. The magnetic field created by such a coil 17 as the induction element causes the treated material to reach the desired temperature (200°-750°C, as stated previously) in an estimated time of about 20-50 min. As mentioned previously, an appropriate number of thermocouples 11 placed along the reactor, (fig.8) manage the electric power required to operate with the necessary predetermined temperature. Advantageously, the fluid passing inside the copper tube of the coil 17 is constantly cooled by a chiller, (cooler) not shown, to ensure the non-fusion state thereof.

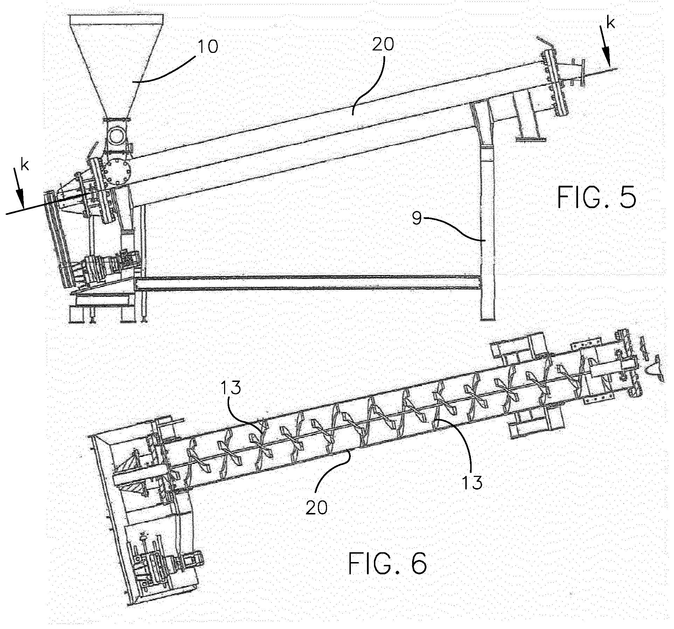

According to a feature of the invention, the auger 13 itself, inside the reactor 20, (fig.6), besides the task of carrying the waste, being inside the magnetic field created by the coil 17, becomes the heating element, transferring heat to the waste with which it is in contact. This results in the formation of a homogenously warmer environment with a significantsaving in energy/time.

In this regard, it is worth noting that the waste enters the reactor at ambient temperature and therefore in solid form; then, due to the heating, it takes on a doughy consistency and then, due to the cracking reactions, it gradually becomes more and more liquid and is converted into vapor, while a part, containing the aggregates, forms the solid by-product (pyrolysis coke). The advancing speed of the auger adjusts both the residence time of the treated material in the reactor and the consumption of waste.

Probes are also present inside the reactor for measuring the concentration of free oxygen, as well as a nitrogen insufflation system, which is activated in the event of a concentration of oxygen greater than 4% by volume. Finally, the seal of the connection with the coke discharging system in the terminal area is ensured by spiral-wound gaskets.

### C) Solid discharging system

A system is provided in the end part of the reactor for recovering hydrocarbon-based vapor, which is then sent for condensation, and solid waste (mainly pyrolysis *coke).* The exit of the waste, through a tubular conduit 26, is managed by a further pair of guillotine valves 27a, 27b operating in opposite mode (open-closed/closed-open), as for the loading system. There is a second vacuum chamber 28 between the two guillotines, from which, before the opening of the lower guillotine, any gas/vapor possibly physiologically drawn in by the carbon part is sucked in, returning it to the condensation system.

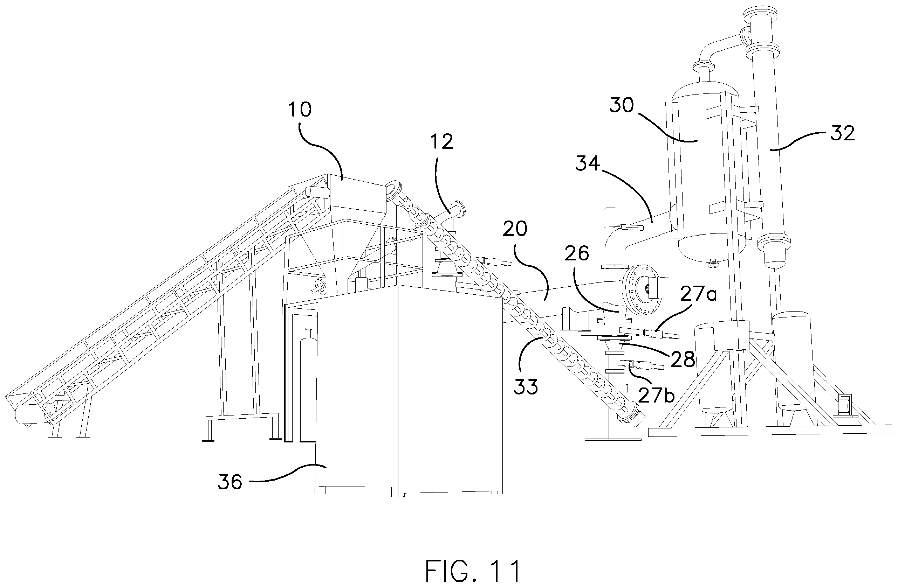

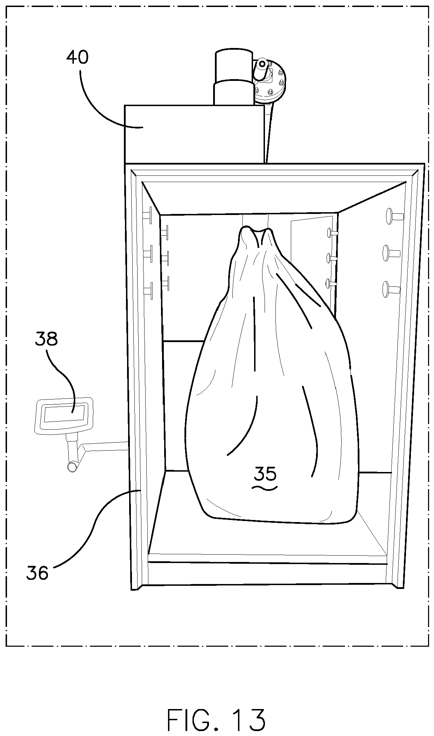

Downstream of such a system, the waste is removed from the reactor through a metal tube 33, which is inclined upwards (see figs. 2A and 11) and provided internally with a steel auger. At the same time, a cooling process is carried out (until ambient temperature), and then the waste is emptied (fig.13) into a "big bag" 35 (an approved big bag for transporting hazardous materials), which is inserted into a metal structure 36 and provided with an appropriate seal system, as well as with a system 38 for continuously checking the discharged weight. Outside the "big bag" an extracting and filtering hood 40 prevents the dispersion, into the environment, of vapors and powders not collected in the appropriate bags.

### D) Cooling/condensation tower

The vapors from the reactor 20, retrieved by a downstream suction pump P, are sent through the angled conduit 34 (figs. 2, 2a, 11) to a cooling tower", also referred to as an "energy heat sink", consisting of a vertical tank 30 made of carbon steel having a volume according to the amount/h of waste to be treated. From this first condensation, the liquid part comes out of the bottom directed towards the filtering units 38 and from the sky, the gaseous part, which is directed towards a second condenser 32, (fig.1) consisting of a tank with a double wall where a cooling fluid passes from the chiller. In the same condenser a second separation is created between the condensed liquid part and the incondensable gaseous part. The liquid part is sent to the filtering units 38 like the first, the gaseous part is sucked in by the pump P, which sends it to the storage tank F (fig.1).

### Scrubber for the gas and gas and liquid storage unit

After the filtering process with self-cleaning metal mesh cartridges, the liquid is sent to a horizontally arranged cylindrical tank. By way of non-limiting example, in a system capable of treating 1.5 Ton/hour of non-hazardous special waste, as above, such a storage tank has a volume of 5 m³, including support feet and is provided with a containment tub.

On the other hand, the coarse part is sent to a water scrubber for the removal of coarse particles, tar etc. before reaching the storage tank. Preferably, the scrubber is cylindrical and, in the same 1.5Ton/hour system, taken by way of example, as above, it has a diameter of 800 mm, a height of 2000 mm, for a volume of 1 m^{3.}

Periodically, the analysis of the water used in the scrubber is performed, even for the purpose of better defining the most appropriate treatment system.

### Control panel

The whole system is provided with an automation and computerized system, which is managed by a control panel ( also from remote), placed at an opportune distance from the system. The panel receives the information from the various sensors (temperature, concentration of oxygen, etc.) and the controls are made available for managing the process efficiently and safely. In particular, an O₂ detector is present inside the reactor, which will control the introduction of N₂, two pressure regulators for modifying the pressures between the heat sink, conduits and tanks, a system for continuously registering the pressures and thermal and mechanical flow switches for measuring and controlling the production of gas and oil.

### Points of emission into the atmosphere

The pilot plant is provided with two points for emission into the atmosphere, one from the generator where the gas/oil produced by the process is burnt, and the other from the extracting hood placed above the "big bag" for packing the carbon residue.

As regards the first emission point, the hot discharge fumes of the generator cross a catalytic block system, which, combined with the urea, separate into nitrogen and water vapor, eliminating the CO by 78% and the NO_{X} by 73,3 %.

As regards the second emission point, the conduit, which leads from the hood to the flue, is provided with a "disposable" cartridge filter with active carbons for removing the volatile organic compounds and particulates possibly present in the emissions.

### Safety devices

The system is provided with a safety torch «with a hidden flame» for the combustion of the gas produced, which is activated automatically in the event of the generator malfunctioning or overpressure in the storage tank, and also with a CO₂ fire-prevention system. Another safety device mentioned above consists of a "pack" of nitrogen cylinders, the content of which will be used to render the atmosphere inert inside the reactor in the event of exceeding the concentration limit of 4% of oxygen.

### Procedure for sampling and characterizing the process products.

Collection points are included for the liquid, gaseous and solid by-products from the process, under normal operating conditions and after the lapse of a sufficiently long period of time from the start of the process, for then subjecting them to analysis. A draw-off tap is provided at the inlet of the storage tank for the liquid sampling. A dispensing tap is provided at the outlet of the pump and before the storage tank thereof for the gas sampling. Finally, for the solid (pyrolysis coke), a sample is simply taken from the big collection bag.

The plant ensures, and must ensure that the outgoing solid carbon residue must respect the classification of non "HAZARDOUS" waste, or, in the event of the need for disposal as waste, the characterization has the code 190112 ("heavy ash and incineration slag or waste pyrolysis, containing non-hazardous substances).

### EXPERIMENTAL TESTS

Significantly different results were obtained from the experiments carried out with a pilot plant on ELT (End-of-Life tires), differently modulating the process times and temperatures between each other, obtaining different types of by-products to use again commercially as secondary/raw materials losing the WASTE classification.

At an operating temperature of 480° C x 60 minutes, the following were obtained:
20% syngas,
35% synoil
45% carbon black, which is used as an additive for road asphalts for increasing resistance to abrasion.

At an operating temperature of 480°C x 80 minutes, the following were obtained:
46% Syngas
18% synoil
36% carbon black 774, used as an additive in products made of rubber to increase resistance to wear and carbon black.

At an operating temperature of 600°C x 60 minutes, the following were obtained:
49% Syngas
23% synoil
28% carbon black, with a high BET value (surface area per unit of mass), optimum for activating it reaching a BET of 600-700mq/g, with a difference of only 15/20%.

The several advantages of the present invention as compared to the prior art are apparent from the description:
a) the described plant with the loading and discharging system can operate continuously with an annual increase in production of up to 40%;
b) the vacuum chamber system ensures a presence of air in the reactor < than 0.5%;
c) the induction system allows a saving of 42% of electricity required for the process, at the same temperature, with respect to a traditional electrical resistance;
d) the induction heating system allows not using the obsolete naked flame system, with the consequent emissions produced by the combustion;
e) the use of the auger inside the reactor as thermal vector returning thermal energy;
f) the use of the suction pump downstream of the system, as proportional regulator of gas/oil production.

## Claims

1. A pyrolytic molecular dissociator system for non-hazardous special waste for producing a hydrocarbon-based fuel gas and oil, **characterized in that** it comprises a cylindrical tubular reactor provided externally with a sectorial induction heating system through which a magnetic field is created, the power of which is modulable by sectors as required, and internally with an auger, which advances the waste to be treated, finely crushed, which is continuously introduced through a feeding system comprising a loading hopper and a feeding tube inside which a varying pitch auger is arranged, which carries the loaded waste to the hopper until the reactor inlet, the protection of the reactor from the ingress of parasitic air being ensured by the presence of a two valve-guillotine system, arranged between the auger system and the reactor inlet, which function in opposition (open-closed /closed-open) to minimize the risk of oxidation/ combustion reactions in the same pyrolytic reactor due to a concentration of free oxygen greater than 4% by volume.

2. A pyrolytic molecular dissociator system for non-hazardous special waste according to the preceding claim **characterized in that** there is a vacuum chamber between the two guillotines, where, after letting the waste in from the first guillotine, before opening the second one, a suction of any air physiologically drawn in by the material is applied for the time needed.

3. A pyrolytic molecular dissociator system according to claim 1 **characterized in that**, in combination with the feeding system with two guillotine valves, the reactor is also provided with a safety system, which insufflates nitrogen therein, should the concentration of oxygen exceed 4% by volume.

4. A molecular dissociator system according to any one of the preceding claims, **characterized in that** the reactor is provided externally with a sectorial induction heating system, in the form of a coil consisting of a copper tube, crossed by a refrigerant, through which a magnetic field is created, the power of which is modulable by sectors as required, due to the presence of thermocouples distributed along the length of the reactor.

5. A pyrolytic molecular dissociator system according to claim 4 **characterized in that** the external sectorial induction heating enables operating temperatures from 200° to 750°C to be reached, avoiding the use of the obsolete naked flame system with the consequent emissions produced from the combustion, allowing a saving of 42% of electricity required for the process, at the same temperature, with respect to a traditional electrical resistance.

6. A pyrolytic molecular dissociator system according to any one of the preceding claims or a combination thereof, **characterized in that** inside the reactor there is an auger, which, besides advancing the waste to be treated, being inside the magnetic field generated by the coil, which envelops the reactor, exercises the function of a thermal vector capable of returning thermal energy to the waste with which it is in contact, the advancing speed of the auger adjusting both the residence time of the material to be treated inside the reactor and the consumption of the waste.

7. A pyrolytic molecular dissociator system according to any one of the preceding claims or a combination thereof, **characterized in that** the reactor is arranged on a slight slope, with an inclination between 10° and 20° to favor the outgoing flow of the vapors created due to the process, it is mounted onto a metal support structure and it is provided with a grounding system.

8. A pyrolytic molecular dissociator system according to any one of the preceding claims or a combination thereof, **characterized in that** probes are present inside the cylindrical tubular reactor for measuring the concentration of free oxygen.

9. A pyrolytic molecular dissociator system according to any one of the preceding claims or a combination thereof **characterized in that** a system is provided for recovering hydrocarbon-based vapor, at the outlet end of the reactor, to be sent to the condensation, and solid waste, the exit of said waste being managed by a second pair of guillotine valves operating in opposite mode <(open-closed/closed-open), as for the loading system, a second vacuum chamber being present between the two guillotines, from which, before the opening of the lower outlet guillotine, any gas/vapor possibly physiologically drawn in by the carbon part is sucked in, returning it to the condensation system.

10. A pyrolytic molecular dissociator system according to the preceding claim **characterized in that** downstream of the hydrocarbon-based vapor recovery system, the waste is removed from the reactor through a metal tube, which is inclined upwards and provided internally with a metal auger, which empties it into a bag (big bag) inserted in a metal structure with a system for controlling the discharged weight, which is provided with an extracting and filtering hood adapted to prevent the dispersion of vapors and powders into the environment.

11. A pyrolytic molecular dissociator system according to any one of the preceding claims or a combination thereof, **characterized in that** the gas current produced in the reactor after the cracking reactions is sucked in by a pump downstream of the system: and caused to pass through two condensers in series at a varying and programmable temperature, to cool the gas so as to determine, in the first condenser, the condensation of the heaviest fraction thereof, which forms a liquid mainly consisting of hydrocarbons having boiling temperatures, and thus molecular weights, between the cut of the gas and that of the heavy fuel, which comes out of the bottom of the first condenser, directed towards a filtering unit, while, from the sky the gaseous part passes to the second condenser, consisting of a tank with a double wall, where a cooling fluid passes from a chiller, where a second separation takes place between the condensed liquid part and an incondensable gaseous part.

12. A pyrolytic molecular dissociator system according to the preceding claim **characterized in that** the fraction with the smaller molecular weight also remains in the gaseous phase downstream of the cooling and forms a different product from the liquid, consisting in part of light products from the cracking reactions, such as molecular hydrogen (H2) and light hydrocarbons, such as methane, CH4, ethane C2H6, propane C3H8, which is sucked in by the pump and sent to a storage tank.

13. A pyrolytic molecular dissociator system according to claim 1 **characterized in that**, besides facilitating the removal of gas from inside the reactor, the gas suction pump also has the function of adjusting the residence time of the gas in the condensers, giving the possibility to obtain a greater or smaller amount of liquid product.

14. A pyrolytic molecular dissociator system according to claim 11 **characterized in that** the filtering unit consists of a parallel series of self-cleaning metal mesh cartridges contained in a cylindrical tank arranged horizontally and provided with a containment tub.

15. A pyrolytic molecular dissociator system according to claim 13 **characterized in that** the incondensable gas is sent to a water scrubber for the removal of coarse particles, of tar and other impurities.

16. A method for continuously treating non-hazardous special waste **characterized in that** it includes the following steps:
a) finely crushing the waste to be treated;
b sending such a waste to a thermal pyrolytic reactor arranged on a slight slope (inclination of 10°-20°) to favor the outgoing flow of the vapors created due to the pyrolytic process, by means of a feeding system, which includes the combined use of two guillotine valves, between which there is a vacuum chamber operating so as to eliminate the ingress of "parasitic" air and thus minimize the risk of oxidation/combustion reactions inside said reactor;
c) heating said pyrolytic reactor, preventing the emissions produced by a naked flame combustion, by means of a sectorial induction heating system, using a coil, which is enveloped externally, consisting of a copper tube, crossed by a refrigerant, through which a magnetic field is created, the power of which is modulable by sectors as required, due to the presence of thermocouples distributed along the length of the reactor capable of managing the internal operating temperature of the reactor at a desired temperature between 200° and 750°C;
d) arranging an auger inside said reactor, which, besides advancing the waste to be treated, being inside the magnetic field generated by the coil, enveloping the reactor, exercises the function of a thermal vector capable of returning thermal energy to the waste with which it is in contact, with the formation of a homogeneously warmer environment with a significant saving in energy/time;
e) arranging means in the end part of the reactor, for separately recuperating the hydrocarbon-based vapor, to send it to the condensation step, and the solid waste (mainly pyrolysis coke) managing the exit of the waste by means of a further pair of guillotine valves operating in opposite mode (open-closed/closed-open), as for the loading system, and providing, between the two guillotines, a second vacuum chamber, from which, before the opening of the lower guillotine, any gas/vapor possibly physiologically drawn in by the carbon part is sucked in, returning it to the condensation step;
f) using, for such a condensation step, two condensers in series at a varying and programmable temperature, for cooling the gas so as to determine, in the first condenser, the condensation of the heaviest fraction thereof, which forms a liquid mainly consisting of hydrocarbons having boiling temperatures, and thus molecular weights, between the cut of the gas and that of the heavy fuel, which comes out of the bottom of the first condenser directed towards a filtering unit, while, from the sky, the gaseous part passes to the second condenser, consisting of a tank with a double wall where a cooling fluid passes from a chiller, where a second separation takes place between the condensed liquid part and a gaseous part with a smaller incondensable molecular weight;
g) sucking in the gas current produced in said reactor by a pump downstream of the system, which pump, besides facilitating the removal of the gas from inside the reactor, allows adjusting the residence time of the gas through the two condensers with a varying and programmable temperature, giving the possibility to obtain, by condensing the heaviest fraction, a greater or smaller amount of liquid product, which mainly consists of hydrocarbons having boiling temperatures (and thus molecular weights) approximately between the cut of the gas and that of the heavy fuel, while the fraction with the smaller molecular weight, which also remains in the gaseous phase downstream of the cooling, forms a different product from the liquid, which is sucked in by the pump and sent to a storage tank consisting, in part, of light products from the cracking reactions, such as molecular hydrogen (H2) and light hydrocarbons, such as methane, CH4, ethane C2H6, propane C3H8

17. A method for treating non-hazardous special waste according to claim 16 **characterized in that** it includes, in combination with the waste feeding system, the insufflation into the reactor of nitrogen should the concentration of oxygen exceed 4% by volume.

18. A method for treating non-hazardous special waste according to claim 16 **characterized in that** the filtering unit consists of a parallel series of self-cleaning metal mesh cartridges contained in a cylindrical tank arranged horizontally and provided with a containment tub.

19. A method for treating special waste according to claims from 16 onwards **characterized in that** the incondensable gas is sent to a water scrubber for the removal of coarse particles, of tar and other impurities.

20. A method for treating special waste according to claims 16 onwards **characterized in that** it includes removing the waste from the reactor through a metal conduit, which is inclined upwards and provided internally with a steel auger, simultaneously performing a method for cooling up to room temperature, and thus discharging said waste into an approved big bag for transporting dangerous goods, which is inserted in a metal structure and provided with an appropriate sealing system, as well as with a system for continuously controlling the discharged weight, where an extracting and filtering hood prevents the dispersion, into the environment, of vapors and fine powders not collected in the appropriate big bag.

## Patentansprüche

1. Pyrolytisches Molekulardissoziatorsystem für ungefährlichen Sondermüll zur Herstellung von Kohlenwasserstoff-basiertem Brenngas und Heizöl, **dadurch gekennzeichnet, dass** es einen zylindrischen Rohrreaktor umfasst, der außen mit einem sektoriellen Induktionsheizsystem, durch das ein Magnetfeld erzeugt wird, dessen Leistung je nach Bedarf sektoriell modulierbar ist, und innen mit einer Schnecke bereitgestellt ist, die den zu behandelnden, fein zerkleinerten Müll vorwärts bewegt, der kontinuierlich über ein Beschickungssystem zugeführt wird, das einen Einfülltrichter und ein Beschickungsrohr umfasst, in dem eine Schnecke mit variablem Schneckengang angeordnet ist, der den auf den Einfülltrichter geladenen Müll bis zum Reaktoreinlass befördert, wobei der Schutz des Reaktors vor dem Eindringen parasitärer Luft durch das Vorliegen eines Zweiventil-Guillotine-Systems sichergestellt ist, das zwischen dem Schneckensystem und dem Reaktoreinlass angeordnet ist und gegenläufig funktioniert (offengeschlossen/geschlossen-offen), um das Risiko von Oxidations-/Verbrennungsreaktionen in dem betreffenden pyrolytischen Reaktor aufgrund einer Konzentration von freiem Sauerstoff von mehr als 4 Volumenprozent zu minimieren.

2. Pyrolytisches Molekulardissoziatorsystem für nicht gefährliche Sondermüll nach dem vorangehenden Anspruch, **dadurch gekennzeichnet, dass** sich zwischen den beiden Guillotinen eine Vakuumkammer befindet, in der nach dem Einlassen des Mülls aus der ersten Guillotine vor dem Öffnen der zweiten Guillotine eine Absaugung der vom Material physiologisch angesaugten Luft für die erforderliche Zeit erfolgt.

3. Pyrolytisches Molekulardissoziatorsystem nach Anspruch 1, **dadurch gekennzeichnet, dass** der Reaktor in Kombination mit dem Beschickungssystem mit zwei Guillotine-Ventilen auch mit einem Sicherheitssystem bereitgestellt ist, das darin Stickstoff einbläst, wenn die Sauerstoffkonzentration 4 Volumenprozent überschreitet.

4. Molekulardissoziatorsystem nach einem der vorangehenden Ansprüche, **dadurch gekennzeichnet, dass** der Reaktor außen mit einem sektoriellen Induktionsheizsystem in Form einer Spule bereitgestellt ist, die aus einem Kupferrohr besteht, das von einem Kühlmittel durchquert wird, durch das ein Magnetfeld erzeugt wird, dessen Leistung aufgrund des Vorliegens von über die Länge des Reaktors verteilten Thermoelementen je nach Bedarf sektoriell modulierbar ist.

5. Pyrolytisches Molekulardissoziatorsystem nach Anspruch 4, **dadurch gekennzeichnet, dass** die externe sektorielle Induktionsheizung das Erreichen von Betriebstemperaturen von 200° bis 750°C ermöglicht, wobei die Verwendung des veralteten Systems der nackten Flamme mit den daraus resultierenden Verbrennungsemissionen vermieden wird, was eine Einsparung von 42% des für den Prozess erforderlichen elektrischen Stroms bei gleicher Temperatur im Vergleich zu einem herkömmlichen elektrischen Widerstand ermöglicht.

6. Pyrolytisches Molekulardissoziatorsystem nach einem der vorangehenden Ansprüche oder einer Kombination davon, **dadurch gekennzeichnet, dass** im Inneren des Reaktors eine Schnecke vorhanden ist, die neben dem Vorschub des zu behandelnden Mülls innerhalb des von der Spule erzeugten Magnetfeldes, das den Reaktor umgibt, die Funktion eines thermischen Vektors ausübt, der in der Lage ist, Wärmeenergie an den Müll zurückzugeben, mit dem er in Kontakt ist, wobei die Vorschubgeschwindigkeit der Schnecke sowohl die Verweilzeit des zu behandelnden Materials im Reaktor als auch den Verbrauch des Mülls regelt.

7. Pyrolytisches Molekulardissoziatorsystem nach einem der vorangehenden Ansprüche oder einer Kombination davon, **dadurch gekennzeichnet, dass** der Reaktor auf einer leichten Schräge mit einer Neigung zwischen 10° und 20° angeordnet ist, um das Ausströmen der durch den Prozess erzeugten Dämpfe zu begünstigen, dass er auf einer Metallträgerstruktur montiert ist und dass er mit einem Erdungssystem bereitgestellt ist.

8. Pyrolytisches Molekulardissoziatorsystem nach einem der vorangehenden Ansprüche oder einer Kombination davon, **dadurch gekennzeichnet, dass** im Inneren des zylindrischen Rohrreaktors Sonden zur Messung der Konzentration von freiem Sauerstoff vorhanden sind.

9. Pyrolytisches Molekulardissoziatorsystem nach einem der vorangehenden Ansprüche oder einer Kombination davon, **dadurch gekennzeichnet, dass** ein System zur Rückgewinnung von Kohlenwasserstoff-basiertem Dampf, der der Kondensation am Auslassende des Reaktors zugeführt werden soll, und festem Müll bereitgestellt ist, wobei der Austritt des Mülls durch ein zweites Paar von Guillotine-Ventilen vorgenommen wird, die im entgegengesetztem Modus «offengeschlossen/geschlossen-offen), wie für das Beladungssystem, arbeiten, wobei zwischen den beiden Guillotinen eine zweite Vakuumkammer vorhanden ist, aus der vor dem Öffnen der unteren Auslass-Guillotine möglicherweise physiologisch durch den Kohlenstoffteil angesaugte Gase/Dämpfe angesaugt werden, um sie in das Kondensationssystem zurückzuführen.

10. Pyrolytisches Molekulardissoziatorsystem nach dem vorangehenden Anspruch, **dadurch gekennzeichnet, dass** stromabwärts des Systems zur Rückgewinnung von Kohlenwasserstoff-basierten Dämpfen der Müll aus dem Reaktor durch ein Metallrohr entfernt wird, das nach oben geneigt und innen mit einer Metallschnecke bereitgestellt ist, die ihn in einen Sack (Big Bag) entleert, der in eine Metallstruktur mit einem System zur Kontrolle des entladenen Gewichts eingesetzt ist, die mit einer Absaug- und Filterhaube bereitgestellt ist, die dazu ausgelegt ist, die Dispersion von Dämpfen und Stäuben in die Umgebung zu verhindern.

11. Pyrolytisches Molekulardissoziatorsystem nach einem der vorangehenden Ansprüche oder einer Kombination davon, **dadurch gekennzeichnet, dass** der im Reaktor nach den Crack-Reaktionen erzeugte Gasstrom durch eine Pumpe stromabwärts des Systems angesaugt wird: und bewirkt wird, dass er zwei hintereinander geschaltete Kondensatoren mit variabler und programmierbarer Temperatur durchläuft, um das Gas so abzukühlen, dass im ersten Kondensator die Kondensation seiner schwersten Fraktion erfolgt, die eine Flüssigkeit bildet, die hauptsächlich aus Kohlenwasserstoffen besteht, deren Siedetemperaturen und damit Molekulargewichte zwischen dem Schnitt des Gases und dem des Schweröls liegen, das aus dem Boden des ersten Kondensators austritt und zu einer Filtereinheit geleitet wird, während der gasförmige Teil von oben in den zweiten Kondensator gelangt, der aus einem Tank mit einer doppelten Wand besteht, in der eine Kühlflüssigkeit aus einem Kühler entlangfließt, wo eine zweite Trennung zwischen dem kondensierten flüssigen Teil und einem unkondensierbaren gasförmigen Teil stattfindet.

12. Pyrolytisches Molekulardissoziatorsystem nach dem vorangehenden Anspruch, **dadurch gekennzeichnet, dass** die Fraktion mit dem geringeren Molekulargewicht auch stromabwärts von der Kühlung in der Gasphase verbleibt und ein von der Flüssigkeit verschiedenes Produkt bildet, das zum Teil aus leichten Produkten aus den Crack-Reaktionen, wie molekularem Wasserstoff (H2) und leichten Kohlenwasserstoffen, wie Methan, CH4, Ethan C2H6, Propan C3H8, besteht, das von der Pumpe angesaugt und in einen Speichertank geleitet wird.

13. Pyrolytisches Molekulardissoziatorsystem nach Anspruch 1, **dadurch gekennzeichnet, dass** die Gasabsaugpumpe, neben der erleichterten Entfernung von Gas aus dem Inneren des Reaktors, auch die Funktion hat, die Verweilzeit des Gases in den Kondensierern einzustellen, was die Möglichkeit bietet, eine größere oder kleinere Menge an flüssigem Produkt zu erhalten.

14. Pyrolytisches Molekulardissoziatorsystem nach Anspruch 11, **dadurch gekennzeichnet, dass** die Filtereinheit aus einer parallelen Reihe von selbstreinigenden Metallgitterkartuschen besteht, die in einem zylindrischen Tank enthalten sind, der horizontal angeordnet und mit einer Auffangwanne bereitgestellt ist.

15. Pyrolytisches Molekulardissoziatorsystem nach Anspruch 13, **dadurch gekennzeichnet, dass** das unkondensierbare Gas einem Wasserwäscher zur Entfernung von groben Partikeln, Teer und anderen Verunreinigungen zugeführt wird.

16. Verfahren zur kontinuierlichen Behandlung von nicht gefährlichem Sondermüll, **dadurch gekennzeichnet, dass** es folgende Schritte einschließt:
a) Feines Zerkleinern des zu behandelnden Mülls;
b) Zuführen eines solchen Mülls zu einem thermischen Pyrolysereaktor, der auf einer leichten Schräge (Neigung von 10°-20°) angeordnet ist, um den Abfluss der durch den Pyrolyseprozess erzeugten Dämpfe zu begünstigen, und zwar mit Hilfe eines Beschickungssystems, das die kombinierte Verwendung von zwei Guillotine-Ventilen einschließt, zwischen denen sich eine Vakuumkammer befindet, die so arbeitet, dass das Eindringen von "parasitärer" Luft verhindert und somit das Risiko von Oxidations-/Verbrennungsreaktionen im Inneren des Reaktors minimiert wird;
c) Erwärmen des Pyrolysereaktors unter Vermeidung der durch die Verbrennung mit offener Flamme entstehenden Emissionen durch ein sektorielles Induktionsheizsystem, das eine außen umhüllte Spule verwendet, die aus einem von einem Kühlmittel durchströmten Kupferrohr besteht, durch das ein Magnetfeld erzeugt wird, dessen Leistung aufgrund des Vorliegens von über die Länge des Reaktors verteilten Thermoelementen, die in der Lage sind, die interne Betriebstemperatur des Reaktors auf eine gewünschte Temperatur zwischen 200° und 750°C zu steuern, nach Bedarf sektoriell modulierbar ist;
d) Anordnen einer Schnecke im Inneren des Reaktors, die neben dem Vorschub des zu behandelnden Mülls innerhalb des von der Spule erzeugten Magnetfeldes, das den Reaktor umgibt, die Funktion eines thermischen Vektors ausübt, der in der Lage ist, an den Müll, mit dem er in Kontakt ist, Wärmeenergie zurückzugeben, wobei eine homogen wärmere Umgebung mit einer erheblichen Energie- /Zeitersparnis geschaffen wird;
e) Anordnen von Mitteln im Endteil des Reaktors zur getrennten Rückgewinnung des Dampfes auf Kohlenwasserstoffbasis, um ihn zur Kondensationsstufe zu schicken, und des festen Mülls (hauptsächlich Pyrolysekoks), die den Austritt des Mülls mittels eines weiteren Paars von Guillotine-Ventilen steuern, die in entgegengesetzter Betriebsart (offen-geschlossen/geschlossen-offen), wie für das Beladungssystem, arbeiten, und Bereitstellen einer zweiten Vakuumkammer zwischen den beiden Guillotinen, aus der vor dem Öffnen der unteren Guillotine möglicherweise physiologisch durch den Kohlenstoffanteil angesaugtes Gas/Dampf abgesaugt wird, um es in den Kondensationsschritt zurückzuführen;
f) Verwenden von zwei hintereinander geschalteten Kondensatoren mit variabler und programmierbarer Temperatur für diesen Kondensationsschritt, um das Gas so abzukühlen, dass im ersten Kondensator die Kondensation der schwersten Fraktion des Gases erfolgt, die eine Flüssigkeit bildet, die hauptsächlich aus Kohlenwasserstoffen besteht, deren Siedetemperaturen und damit Molekulargewichte zwischen dem Schnitt des Gases und dem des Schweröls liegen, das aus dem Boden des ersten Kondensators in Richtung einer Filtereinheit austritt, während der gasförmige Teil von oben in den zweiten Kondensator gelangt, der aus einem Tank mit einer doppelten Wand besteht, in der eine Kühlflüssigkeit aus einem Kühler entlang fließt, wo eine zweite Trennung zwischen dem kondensierten flüssigen Teil und einem gasförmigen Teil mit einem kleineren unkondensierbaren Molekulargewicht stattfindet;
g) Ansaugen des in dem Reaktor erzeugten Gasstroms durch eine Pumpe stromabwärts des Systems, wobei die Pumpe nicht nur die Entfernung des Gases aus dem Inneren des Reaktors erleichtert, sondern auch die Einstellung der Verweilzeit des Gases durch die beiden Kondensatoren mit einer variablen und programmierbaren Temperatur ermöglicht, was die Möglichkeit bietet, durch Kondensieren der schwersten Fraktion eine größere oder kleinere Menge eines flüssigen Produkts zu erhalten, das hauptsächlich aus Kohlenwasserstoffen besteht, die Siedetemperaturen (und damit Molekulargewichte) haben, die ungefähr zwischen dem Schnitt des Gases und dem des Schweröls liegen, während die Fraktion mit dem geringeren Molekulargewicht, die stromabwärts der Kühlung ebenfalls in der Gasphase verbleibt, ein von der Flüssigkeit unterschiedliches Produkt bildet, das von der Pumpe angesaugt und zu einem Speichertank geleitet wird, und das zum Teil aus leichten Produkten aus den Crack-Reaktionen besteht, wie molekularem Wasserstoff (H2) und leichten Kohlenwasserstoffen, wie Methan, CH4, Ethan C2H6, Propan C3H8.

17. Verfahren zur Behandlung von nicht gefährlichem Sondermüll nach Anspruch 16, **dadurch gekennzeichnet, dass** es, in Kombination mit dem Müllzuführungssystem, das Einblasen von Stickstoff in den Reaktor einschließt, wenn die Sauerstoffkonzentration 4 Volumenprozent übersteigt.

18. Verfahren zur Behandlung von nicht gefährlichem Sondermüll nach Anspruch 16, **dadurch gekennzeichnet, dass** die Filtereinheit aus einer parallelen Reihe von selbstreinigenden Metallgitterkartuschen besteht, die in einem zylindrischen Tank enthalten sind, der horizontal angeordnet und mit einer Auffangwanne bereitgestellt ist.

19. Verfahren zur Behandlung von Sondermüll nach den Ansprüchen 16 und folgende, **dadurch gekennzeichnet, dass** das unkondensierbare Gas einem Wasserwäscher zur Entfernung von groben Partikeln, Teer und anderen Verunreinigungen zugeführt wird.

20. Verfahren zur Behandlung von Sondermüll nach den Ansprüchen 16 und folgende, **dadurch gekennzeichnet, dass** es das Entfernen des Mülls aus dem Reaktor durch eine Metallleitung einschließt, die nach oben geneigt und innen mit einer Stahlschnecke bereitgestellt ist, wobei gleichzeitig ein Verfahren zur Abkühlung auf Raumtemperatur durchgeführt wird, und so der Müll in einen zugelassenen Big Bag für den Transport gefährlicher Güter entladen wird, der in eine Metallstruktur eingesetzt und mit einem Verschlusssystem sowie mit einem System zum kontinuierlichen Kontrollieren des entladenen Gewichts bereitgestellt ist, wobei eine Absaug- und Filterhaube die Ausbreitung von Dämpfen und feinen Stäuben, die nicht in dem entsprechenden Big Bag gesammelt werden, in die Umgebung verhindert.

## Revendications

1. Système de dissociateur moléculaire pyrolytique pour déchets spéciaux non dangereux pour la production de gaz combustible à base d'hydrocarbures et de fioul, **caractérisé en ce qu'**il comprend un réacteur tubulaire cylindrique doté à l'extérieur d'un système de chauffage par induction sectoriel à travers lequel un champ magnétique est créé, dont la puissance est modulable par secteurs au besoin, et à l'intérieur d'une tarière, qui fait avancer les déchets à traiter, finement broyés, qui sont introduits en continu par l'intermédiaire d'un système d'alimentation comprenant une trémie de chargement et un tube d'alimentation à l'intérieur duquel une tarière à pas variable est agencée, qui transporte les déchets chargés dans la trémie jusqu'à l'entrée du réacteur, la protection du réacteur contre l'entrée d'air parasite étant assurée par la présence d'un système à deux vannes à guillotine, agencé entre le système de tarière et l'entrée du réacteur, qui fonctionne en opposition (ouvert-fermé/fermé-ouvert) pour minimiser le risque de réactions d'oxydation/combustion dans le même réacteur pyrolytique en raison d'une combustion d'oxygène libre supérieure à 4 % en volume.

2. Système de dissociateur moléculaire pyrolytique pour déchets spéciaux non dangereux selon la revendication précédente **caractérisé en ce qu'**il y a une chambre à vide entre les deux guillotines, où, après avoir laissé entrer les déchets de la première guillotine, avant l'ouverture de la deuxième, une aspiration de tout air physiologiquement attiré par le matériau est appliquée pendant la durée nécessaire.

3. Système de dissociateur moléculaire pyrolytique selon la revendication 1 **caractérisé en ce que**, en combinaison avec le système d'alimentation avec les deux vannes guillotines, le réacteur est également doté d'un système de sécurité qui insuffle de l'azote à l'intérieur de celui-ci, si la concentration en oxygène dépasse 4 % en volume.

4. Système de dissociateur moléculaire pyrolytique selon l'une quelconque des revendications précédentes, **caractérisé en ce que** le réacteur est doté à l'extérieur d'un système de chauffage par induction sectoriel, sous la forme d'une bobine constituée d'un tube en cuivre, traversé par un réfrigérant, à travers lequel un champ magnétique est créé, dont la puissance est modulable par secteurs au besoin, en raison de la présence de thermocouples distribués le long de la longueur du réacteur.

5. Système de dissociateur moléculaire pyrolytique selon la revendication 4 **caractérisé en ce que** le chauffage par induction sectoriel externe permet que des températures de fonctionnement de 200° à 750 °C soient atteintes, évitant l'utilisation du système à flamme nue obsolète avec les émissions résultantes produites par la combustion, permettant une économie de 42 % de l'électricité requise pour le processus, à la même température, par rapport à une résistance électrique traditionnelle.

6. Système de dissociateur moléculaire pyrolytique selon l'une quelconque des revendications précédentes ou une combinaison de celles-ci, **caractérisé en ce qu'**à l'intérieur du réacteur se trouve une tarière, qui, outre faire avancer les déchets à traiter, étant à l'intérieur du champ magnétique généré par la bobine, qui enveloppe le réacteur, exerce la fonction d'un vecteur thermique capable de renvoyer l'énergie thermique aux déchets avec lesquels il est en contact, la vitesse de progression de la tarière ajustant à la fois le temps de séjour du matériau à traiter à l'intérieur du réacteur et la consommation des déchets.

7. Système de dissociateur moléculaire pyrolytique selon l'une quelconque des revendications précédentes ou une combinaison de celles-ci, **caractérisé en ce que** le réacteur est agencé sur une légère pente, avec une inclinaison entre 10° et 20° pour favoriser le flux sortant des vapeurs créées en raison du processus, **en ce qu'**il est monté sur une structure de support métallique et **en ce qu'**il est doté d'un système de mise à la terre.

8. Système de dissociateur moléculaire pyrolytique selon l'une quelconque des revendications précédentes ou une combinaison de celles-ci, **caractérisé en ce que** des sondes sont présentes à l'intérieur du réacteur tubulaire cylindrique pour mesurer la concentration en oxygène libre.

9. Système de dissociateur moléculaire pyrolytique selon l'une quelconque des revendications précédentes ou une combinaison de celles-ci **caractérisé en ce qu'**un système est fourni pour récupérer la vapeur à base d'hydrocarbures, au niveau de l'extrémité de sortie du réacteur, à envoyer à la condensation, et les déchets solides, la sortie desdits déchets étant prise en charge par une deuxième paire de vannes guillotines fonctionnant en mode opposé (ouvert-fermé/fermé-ouvert), comme pour le système de chargement, une deuxième chambre à vide étant présente entre les deux guillotines, depuis laquelle, avant l'ouverture de la guillotine de sortie inférieure, tout gaz/toute vapeur éventuellement physiologiquement attiré(e) par la partie carbone est aspiré(e), et renvoyé(e) au système de condensation.

10. Système de dissociateur moléculaire pyrolytique selon l'une quelconque des revendications précédentes **caractérisé en ce qu'**en aval du système de récupération de vapeur à base d'hydrocarbures, les déchets sont retirés du réacteur par l'intermédiaire d'un tube en métal, qui est incliné vers le haut et doté à l'intérieur d'une tarière en métal, qui se déverse dans un sac (sac de grande dimension) inséré dans une structure métallique avec un système de commande du poids déchargé, qui est doté d'une hotte de filtration et d'extraction adaptée à prévenir la dispersion des vapeurs et des poudres dans l'environnement.

11. Système de dissociateur moléculaire pyrolytique selon l'une quelconque des revendications précédentes ou une combinaison de celles-ci, **caractérisé en ce que** le courant de gaz produit dans le réacteur après les réactions de craquage est aspiré par une pompe en aval du système : et amené à passer à travers deux condenseurs en série à une température variable et programmable, pour refroidir le gaz de manière à déterminer, dans le premier condenseur, la condensation de la fraction la plus lourde de celui-ci, qui forme un liquide principalement constitué d'hydrocarbures ayant des températures d'ébullition, et ainsi des poids moléculaires, entre la coupure du gaz et celle du fioul lourd, qui sort du fond du premier condenseur, en direction d'une unité de filtration, alors que, depuis le ciel la partie gazeuse passe au deuxième condenseur, constitué d'une cuve avec une double paroi, où un fluide de refroidissement passe d'un refroidisseur, où une deuxième séparation a lieu entre la partie liquide condensée et une partie gaz non condensable.

12. Système de dissociateur moléculaire pyrolytique selon la revendication précédente **caractérisé en ce que** la fraction avec le poids moléculaire inférieur reste également dans la phase gazeuse en aval du refroidissement et forme un produit différent du liquide, constitué en partie de produits légers des réactions de craquage, tels que de l'hydrogène moléculaire (H2) et des hydrocarbures légers, tels que le méthane CH4, l'éthane C2H6, le propane C3H8, qui est aspiré par la pompe et envoyé à une cuve de stockage.

13. Système de dissociateur moléculaire pyrolytique selon la revendication 1 **caractérisé en ce que**, outre faciliter le retrait de gaz de l'intérieur du réacteur, la pompe d'aspiration de gaz a également la fonction d'ajuster le temps de séjour du gaz dans les condenseurs, offrant la possibilité d'obtenir une plus grande ou plus petite quantité de produit liquide.

14. Système de dissociateur moléculaire pyrolytique selon la revendication 11 **caractérisé en ce que** l'unité de filtration est constituée d'une série parallèle de cartouches autonettoyantes en treillis métallique contenues dans une cuve cylindrique agencée horizontalement et dotée d'un bac de confinement.

15. Système de dissociateur moléculaire pyrolytique selon la revendication 13 **caractérisé en ce que** le gaz non condensable est envoyé à un épurateur à eau pour le retrait de particules grossières, de goudron et autres impuretés.

16. Procédé de traitement continu de déchets spéciaux non dangereux **caractérisé en ce qu'**il comporte les étapes suivantes :
a) le broyage fin des déchets à traiter ;
b) l'envoi de ces déchets à un réacteur pyrolytique thermique agencé sur une légère pente (inclinaison de 10° à 20°) pour favoriser le flux sortant des vapeurs créées en raison du processus pyrolytique, au moyen d'un système d'alimentation, qui comporte l'utilisation combinée de deux vannes guillotines, entre lesquelles se trouve une chambre à vide fonctionnant de manière à éliminer l'entrée d'air « parasite » et ainsi à minimiser le risque de réactions d'oxydation/combustion à l'intérieur dudit réacteur ;
c) le chauffage dudit réacteur pyrolytique, la prévention des émissions produites par une combustion à flamme nue, au moyen d'un système de chauffage par induction sectoriel, utilisant une bobine, qui est enveloppée à l'extérieur, constituée d'un tube en cuivre, traversé par un réfrigérant, à travers lequel un champ magnétique est créé, dont la puissance est modulable par secteurs au besoin, en raison de la présence de thermocouples distribués le long de la longueur du réacteur capable de gérer la température de fonctionnement interne du réacteur à une température souhaitée entre 200 ° et 750 °C ;
d) l'agencement d'une tarière à l'intérieur dudit réacteur, qui, outre faire progresser les déchets à traiter, étant à l'intérieur du champ magnétique généré par la bobine, enveloppant le réacteur, exerce la fonction d'un vecteur thermique capable de renvoyer l'énergie thermique aux déchets avec lesquels il est en contact, avec la formation d'un environnement plus chaud de manière homogène avec une économie significative d'énergie/de temps ;
e) l'agencement d'un moyen dans la partie d'extrémité du réacteur, pour séparément récupérer la vapeur à base d'hydrocarbures, pour l'envoyer à l'étape de condensation, et les déchets solides (principalement coke de pyrolyse), prendre en charge la sortie des déchets au moyen d'une autre paire de vannes guillotines fonctionnant en mode opposé (ouvert-fermé/fermé-ouvert), comme pour le système de chargement, et fournir, entre les deux guillotines, une deuxième chambre à vide, à partir de laquelle, avant l'ouverture de la guillotine inférieure, tout gaz/toute vapeur éventuellement physiologiquement attiré(e) par la partie carbone est aspiré(e), et renvoyé(e) à l'étape de condensation ;
f) l'utilisation, pour une telle étape de condensation, de deux condenseurs en série à une température variable et programmable, pour refroidir le gaz de manière à déterminer, dans le premier condenseur, la condensation de la fraction la plus lourde de celui-ci, qui forme un liquide principalement constitué d'hydrocarbures ayant des températures d'ébullition, et ainsi des poids moléculaires, entre la coupure du gaz et celle du fioul lourd, qui sort du fond du premier condenseur en direction d'une unité de filtration, alors que, du ciel, la partie gazeuse passe au deuxième condenseur, constitué d'une cuve à double paroi où un fluide de refroidissement passe depuis un refroidisseur, où une deuxième séparation a lieu entre la partie liquide condensée et une partie gazeuse avec un poids moléculaire non condensable inférieur ;
g) l'aspiration du courant de gaz produit dans ledit réacteur par une pompe en aval du système, laquelle pompe, outre faciliter le retrait du gaz de l'intérieur du réacteur, permet l'ajustement du temps de séjour du gaz à travers les deux condenseurs avec une température variable et programmable, offrant la possibilité d'obtenir, par condensation de la fraction la plus lourde, une quantité plus grande ou plus petite de produit liquide, qui est principalement constitué d'hydrocarbures ayant des températures d'ébullition (et ainsi des poids moléculaires) approximativement entre la coupure du gaz et celle du fioul lourd, alors que la fraction avec le poids moléculaire inférieur, qui reste également dans la phase gazeuse en aval du refroidissement, forme un produit différent du liquide, qui est aspiré par la pompe et envoyé à une cuve de stockage et constitué, en partie, de produits légers des réactions de craquage, tels que de l'oxygène moléculaire (H2) et des hydrocarbures légers, tels que le méthane, CH4, l'éthane C2H6, le propane C3H8.

17. Procédé de traitement de déchets spéciaux non dangereux selon la revendication 16 **caractérisé en ce qu'**il comporte, en combinaison avec le système d'alimentation de déchets, l'insufflation d'azote dans le réacteur lorsque la concentration en oxygène dépasse 4 % en volume.

18. Procédé de traitement de déchets spéciaux non dangereux selon la revendication 16 **caractérisé en ce que** l'unité de filtration est constituée d'une série parallèle de cartouches autonettoyantes en treillis métallique contenues dans une cuve cylindrique agencée horizontalement et dotée d'un bac de confinement.

19. Procédé de traitement continu de déchets spéciaux non dangereux selon les revendications 16 et suivantes **caractérisé en ce que** le gaz non condensable est envoyé à un épurateur à eau pour l'élimination des particules grossières, du goudron et autres impuretés.

20. Procédé de traitement de déchets spéciaux selon les revendications 16 et suivantes **caractérisé en ce qu'**il comporte l'élimination des déchets du réacteur par l'intermédiaire d'un conduit métallique, qui est incliné vers le haut et doté à l'intérieur d'une tarière en acier, la réalisation simultanée d'un procédé de refroidissement jusqu'à température ambiante, et ainsi la décharge desdits déchets dans un sac de grande dimension approuvé pour le transport de biens dangereux, qui est inséré dans une structure métallique et doté d'un système d'étanchéité adapté, ainsi que d'un système de commande continue du poids déchargé, où une hotte d'extraction et de filtration empêche la dispersion, dans l'environnement, de vapeurs et de poudres fines non collectées dans le sac de grande dimension approprié.
